# FASCICULE DE BREVET EUROPEEN

(11) **EP 0 456 541 B1**
(45) Date de publication et mention de la délivrance du brevet: **06.12.1995**
(21) Numéro de dépôt: 91401056.6
(22) Date de dépôt: 22.04.1991
(51) Int. Cl.: C04B 35/50

(54) **Corps céramique fritté et ses procédés d'obtention**
Keramische Sinterkörper und Verfahren zu seiner Herstellung
Sintered ceramic body and processes for its production

(30) Priorité: 11.05.1990 FR 9005888
(43) Date de publication de la demande: 13.11.1991
(73) Titulaire: COMMISSARIAT A L'ENERGIE ATOMIQUE, 75015 Paris (FR)
(72) Inventeur: Baumard, Jean-François, F-87000 Limoges (FR); Gasnier, Gilles, F-87000 Limoges (FR); Boncoeur, Marcel, F-75012 Paris (FR); Minjolle, Louis, F-92400 Courbevoie (FR)
(74) Mandataire: Poulin, Gérard

(56) Documents cités:
- GB-A- 605 351
- GB-A- 2 163 970
- US-A- 3 897 358
- US-A- 4 040 845

## Description

La présente invention a pour objet un corps céramique fritté comprenant essentiellement d'yttrium et de titane. Elle vise également ses procédés d'obtention.

L'utilisation de l'oxyde d'yttrium seul comme poudre pour céramiques ne permet pas d'obtenir une céramique satisfaisante, car la croissance granulaire se produit trop rapidement au cours de la densification. Il est alors nécessaire de fritter le matériau à température très élevée, généralement supérieure à 1700°C. Sans l'aide d'une pression externe, fournie par exemple par un frittage sous charge ou par une compaction isostatique à chaud, la densité reste limitée par la porosité intragranulaire aux environs de 95 % de la densité théorique. Cette porosité résiduelle et la taille des grains sont préjudiciables aux propriétés, notamment mécaniques.

Le problème qui se pose est d'accélérer le processus de densification par rapport à celui de la croissance granulaire et de trouver un formulation qui favorise l'aptitude au frittage de la poudre d'oxyde d'yttrium. Il serait ainsi possible d'obtenir des céramiques ayant des densités élevées à plus basse température, des densités finales plus proches de la densité théorique et une microstructure améliorée.

L'objet de la présente invention est un corps céramique fritté ayant un poids spécifique súperieur à 4,50 g/cm³ et comprenant essentiellement de 80 à 99,99% en poids d'yttrium exprimé en oxyde d'yttrium et de 0,01 à 20% en poids de titane exprimé en TiO₂ et ses procédés d'obtention.

Il a maintenant été trouvé et c'est ce qui constitue l'objet de la présente invention une composition à base d'oxyde d'yttrium destinée à la préparation d'un corps céramique fritté caractérisée par le fait qu'elle comprend de l'oxyde d'yttrium et au moins un oxyde de titane ou les précurseurs desdits oxydes.

Par précurseur d'oxyde d'yttrium et d'oxyde de titane, on entend tout composé d'yttrium ou de titane (sels minéraux ou organiques, hydroxydes, etc...) susceptible de conduire à une phase oxyde dans les conditions de fabrication du corps céramique fritté.

Par oxyde de titane, on entend l'oxyde de titane TiO₂ et/ou un oxyde mixte Ti-Y tel que Y₂TiO₅ et/ou Y₂Ti₂O₇.

Conformément à la présente invention, il a été trouvé que la présence de l'ion titane lors du frittage de l'oxyde d'yttrium, facilitait et augmentait la densification de l'oxyde d'yttrium, pour une température de frittage donnée.

En d'autres termes, il est possible d'obtenir selon l'invention, une céramique avec une densification donnée à une température de frittage inférieure à la température de frittage d'une poudre ne contenant que de l'oxyde d'yttrium.

La proportion des ions titane exprimés en TiO₂ et yttrium exprimés en Y₂O₃ peut varier dans de larges limites. Toutefois, il convient bien de les mettre en oeuvre dans les proportions suivantes :
- de 0,01 à 20 % en poids de TiO₂
- de 80 à 99,99 % en poids de Y₂O₃
Une composition préférée est la suivante :
- de 0,02 à 10 % en poids de TiO₂
- de 90 à 99,98 % en poids de Y₂O₃
La composition, destinée à la formation du corps céramique fritté faisant objet de la présente invention peut revêtir plusieurs formes essentiellement liées à leur mode de préparation qui sera détaillé ci-après.

Cette composition peut être tout oxyde, c'est-à-dire renfermer l'oxyde d'yttrium et l'oxyde de titane sous forme d'un oxyde simple, éventuellement d'un oxyde mixte Y₂TiO₅, Y₂Ti₂O₇.

Elle peut se présenter sous forme d'un mélange d'oxyde d'yttrium et d'un précurseur d'oxyde de titane.

Il est également possible que l'yttrium et le titane, tous deux soient sous forme de précurseur dans le cas de la mise en oeuvre d'un co-précipité.

Dans tous les cas, il y aura transformation du précurseur d'oxyde en son oxyde correspondant, soit au cours d'une étape préalable de calcination si désirée, soit lors du frittage de la composition afin d'obtenir le corps céramique fritté.

Comme mentionné précédemment, la composition pour céramiques destinée à la formation du corps céramique étant l'objet de la présente invention peut être préparée selon différentes voies.

Une première variante consiste en une technique de "chamottage". On effectue un mélange intime de l'oxyde d'yttrium avec au moins un oxyde de titane, éventuellement un séchage.

L'oxyde d'yttrium mis en oeuvre dans l'invention est un produit connu et décrit dans la littérature.

Il peut être préparé notamment par chauffage à l'air entre 400°C et 1000°C de l'hydroxyde d'yttrium ou de certains sels oxygénés tels que nitrates, sulfates, carbonates, oxalates, acétates (Cf. Paul PASCAL - Nouveau Traité de Chimie Minérale, Tome VII).

Il est préférable que l'oxyde d'yttrium mis en oeuvre soit d'une grande pureté, de préférence supérieure à 99 %.

Quant à l'oxyde de titane, on peut faire appel au monoxyde de titane, au sesquioxyde de titane, au dioxyde de titane sous forme anatase ou rutile.

Il est également possible d'apporter les ions titane sous la forme d'un oxyde mixte d'yttrium et de titane et notamment Y₂TiO₅ et Y₂Ti₂O₇. Ceux-ci sont obtenus par exemple par chamottage d'un mélange d'oxydes de titane et d'yttrium dans les proportions convenables à environ 1300°C.
On peut également mettre en oeuvre un mélange des oxydes précités.

La proportion des différents oxydes mis en oeuvre est telle que l'on ait les pourcentages pondéraux définis ci-dessus.

Les diverses poudres d'oxydes sont, si nécessaire, désagglomérées afin de ne pas présenter d'agglomérats durs. Il est souhaitable qu'elles présentent une granulométrie telle que leur diamètre moyen soit inférieur ou égal à 1 »m : l'analyse granulométrique étant effectuée à l'aide de l'instrument SEDIGRAPH 5000 D qui mesure la répartition des particules en suspension.

On définit le diamètre moyen comme étant un diamètre tel que 50 % des particules en poids, ont un diamètre supérieur ou inférieur au diamètre moyen.

Afin d'amener les poudres à la granulométrie souhaitée, on réalise le plus souvent un broyage qui peut être effectué en humide ou à sec.

Il est possible de mettre en oeuvre le broyage à jet d'air mais, le plus souvent, on conduit le broyage d'une manière classique à sec ou en suspension en présence ou non des additifs habituels de ces techniques : agents de broyage, dispersants.

D'une manière préférentielle, on effectue le broyage des poudres d'oxydes en suspension dans de l'eau ou dans un liquide organique tel que les alcools, par exemple, méthanol, éthanol, n-propanol, isopropanol ou les aldéhydes ou cétones tels que par exemple le benzaldéhyde et , éventuellement, en présence d'un agent dispersant comme par exemple, l'hexamétaphosphate de sodium, le silicate de sodium, la triéthanolamine, les polyacrylates d'ammonium, les glycols tels que le propylèneglycol, le diéthylèneglycol, le triéthylèneglycol, etc...

A l'issue de cette opération de broyage, on obtient un mélange pouvant contenir de 40 à 80 % d'eau ou de liquide organique. Il est alors souhaitable de l'éliminer par séchage.

Le séchage est effectué à une température qui dépend du liquide à éliminer et qui est, le plus souvent, comprise entre 20 et 400°C mais de préférence entre 20 et 150°C. Cette opération peut être faite à l'air ou sous pression réduite par exemple entre 1 et 100 mm de mercure (133,3322 Pa et 13332,2 Pa).
Il peut être effectué notamment selon la technique d'atomisation c'est-à-dire par pulvérisation dans un courant d'air chaud dont la température est choisie dans l'intervalle précité.

La durée du séchage dépend de la quantité de liquide à éliminer et de la technique utilisée. Elle peut donc varier dans de larges limites par exemple, entre 15 minutes et 48 heures.

Un autre mode de réalisation consiste à préparer la composition pour céramiques susmentionnée selon un procédé de co-précipitation qui consiste :
a) à effectuer une co-précipitation d'un composé d'yttrium et de titane à partir d'une solution de sels solubles des éléments précités,
b) à séparer le co-précipité obtenu,
c) éventuellement á séchér le produit obtenu après separation
d) puis éventuellement à le calciner.

Dans la première étape du procédé de l'invention, on co-précipite l'yttrium et le titane.

Les solutions de sels solubles de départ peuvent être des solutions aqueuses ou organiques de composés minéraux ou organométalliques.

Pour ce qui est du solvant organique, on le choisit miscible à l'eau, de préférence un alcool aliphatique ayant de 1 à 4 atomes de carbone ou un glycol tel que, par exemple, l'éthylèneglycol ou le diéthylèneglycol.

Les solutions de sels solubles d'yttrium que l'on utilise au départ sont de préférence des solutions de nitrate, de chlorure et/ou de sulfate d'yttrium.

Le sel d'yttrium est choisi de telle sorte qu'il ne contienne pas d'impuretés qui puissent se retrouver dans le produit calciné. Il peut être avantageux de mettre en jeu un sel d'yttrium présentant un degré de pureté supérieur à 99 %.

La concentration dans la solution, du sel d'yttrium n'est pas un facteur critique selon l'invention et elle peut varier dans de larges limites ; une concentration comprise entre 0,2 et 4 moles par litre est préférée.

En ce qui concerne les sels de titane, on donne, ci-après, une liste non limitative de composés susceptibles d'être utilisés : le chlorure de titane, l'oxychlorure de titane, un alcoolate de titane dérivé d'un alcool aliphatique ayant de 1 à 4 atomes de carbone tel que, par exemple, le tétraméthylate, le tétraéthylate, le tétra n-propylate, le tétraisopropylate, le tétra n-butylate, le tétra isobutylate de titane. Le sel de titane, est choisi préférentiellement d'une grande pureté comme le sel de d'yttrium.

La concentration dans la solution, du sel de titane n'est pas critique et peut également varier de préférence entre 0,002 et 0,04 mole par litre.

On effectue le mélange, dans un ordre quelconque, des différents composés précités dont les proportions sont telles que l'on obtienne les pourcentages pondéraux définis ci-dessus.

Comme composés d'yttrium et de titane que l'on peut précipiter, on peut citer notamment les hydroxydes, les oxalates et les carbonates.

La co-précipitation des hydroxydes peut être effectuée par mélange d'une solution des sels solubles avec une solution basique.

La solution basique mise en oeuvre peut être notamment une solution aqueuse d'ammoniaque ou d'hydroxyde de sodium, de potasse. On met en oeuvre de préférence une solution d'ammoniaque. La normalité de la solution basique mise en oeuvre n'est pas un facteur critique selon l'invention, elle peut varier dans de larges limites, elle sera toutefois avantageusement comprise entre 1 et 5 N, de préférence 2 à 3 N.

La proportion entre la solution basique et la solution de sels solubles d'yttrium et de titane doit être telle que le nombre d'équivalents basiques soit supérieur ou égal au nombre d'équivalents yttrium et titane. Le pH du milieu réactionnel, n'est pas critique et peut varier entre 7 et environ 14. Il est avantageusement compris entre 9 et 12.

La température du milieu réactionnel est généralement comprise, de préférence, entre 10 et 95°C.

On obtient un co-précipité mixte d'hydroxydes d'yttrium et de titane.

Un autre mode de précipitation peut être notamment la co-précipitation oxalique.

Les solutions de sels d'yttrium et de titane répondent aux caractéristiques précitées.

Pour ce qui est de l'agent précipitant, on peut faire appel à l'acide oxalique ou à ses sels de préférence ammonium, sous forme anhydre ou hydratée.

On peut le mettre en oeuvre sous forme cristallisée ou sous forme de solution aqueuse.

Dans ce cas, la concentration exprimée en acide oxalique peut varier entre 0,8 et 3 moles/litre de préférence 0,3 à 1 mole/litre.

La proportion entre la solution oxalique et la solution de sels solubles d'yttrium et de titane est telle que le nombre d'équivalents oxalique soit égal ou supérieur au nombre d'équivalents yttrium et titane. On peut utiliser un excès représentant jusqu'à 50 % de la stoechiomètrie.

La co-précipitation est effectuée à une température comprise entre 10 et 95°C et à un pH de 5,5 à 6.

On obtient un co-précipité d'oxalates d'yttrium, et de titane.

La seconde étape du procédé consiste à séparer le co-précipité de la suspension obtenue. Cette séparation peut être effectuée selon les techniques classiques de séparation liquide/solide telles que décantation, essorage, filtration et/ou centrifugation.

Selon une variante du procédé, le co-précipité séparé peut être ensuite lavé avec de l'eau.

Le produit obtenu après séparation et éventuellement lavage peut ensuite être séché dans les conditions décrites précédemment. La température de séchage est comprise de préférence entre 20 et 150°C ; le temps de séchage variant de préférence entre 15 minutes et 48 heures.

Le produit sec peut être ensuite calciné.

La calcination est généralement opérée à une température comprise entre 400 et 600°C.
La durée de la calcination peut varier entre 30 minutes et 24 heures par exemple, et de préférence entre 1 et 13 heures.
La durée de la calcination est corrélée avec la température et elle est d'autant plus courte que la température de calcination est plus élevée.

Une autre variante consiste à utiliser la technique d'imprégnation de l'oxyde d'yttrium à l'aide d'une solution d'au moins un sel de titane décomposable en oxyde par chauffage que l'on dénommera, de manière simplifiée, précurseur d'oxyde.

A titre de précurseurs d'oxyde, on peut utiliser les sels solubles précités mis en solution aqueuse ou organique comme décrit précédemment.

La concentration de la solution du précurseur d'oxyde dépend de la solubilité dudit précurseur.

D'une manière pratique, on peut réaliser l'imprégnation en introduisant un sel soluble de titane lors de la désagglomération de l'oxyde d'yttrium en milieu alcoolique, par exemple en introduisant un composé organométallique du titane, comme par exemple le tétrabutylate tylate ou le tétraisopropylate et en hydrolysant ce composé organométallique par ajout d'eau. Les poudres d'oxydes en suspension sont alors séchées comme dans le cas de la technique de chamottage. Le séchage et la calcination peuvent être conduits selon les conditions précédemment données.

Les compositions obtenues selon les différentes voies sont destinées à la fabrication d'un corps céramique ayant un poids spécifique superieur à 4,50 g/cm³ et comprenant essentiellement de 80 à 99,99 % en poids d'yttrium exprimé en oxyde d'yttrium et de 0,01 à 20 % en poids de titane exprimé en TiO₂. Elles présentent d'une manière préférée une granulométrie de telle sorte que leur diamètre moyen soit inférieur ou égal à environ 1 »m avec une répartition des tailles de ses grains aussi monomodale que possible.

Les compositions précédemment décrites sont mises en forme par des procédés connus tels que pressage uniaxial, isostatique ou encore par coulage ou injection.

Le corps est alors cuit afin qu'il subisse la densification nécessaire à la formation du corps céramiqué fritté selon l'invention.

Le poids spécifique théorique de l'oxyde d'yttrium est de 5,031 g/cm³.

Le corps céramique fritté obtenu à partir de la composition de l'invention présente un poids spécifique d'au moins 4,50 g/cm³, ce qui correspond à une densité représentant 90 % de la densité théorique déterminée en fonction des paramètres de maille.

Il est avantageux que le corps céramique fritté présente la composition suivante de 90 à 99,98 % en poids environ d'oxyde d'yttrium et de 0,02 à 10 % en poids d'oxyde de titane.

Le corps céramique obtenu présente alors un poids spécifique très proche du poids spécifique théorique qui se situe de préférence au-delà de 4,78 g/cm³, ce qui correspond à une densité représentant de 95 à 100 % de la densité théorique.

Après mise en forme, le corps obtenu est donc fritté au cours d'un cycle thermique dont la température s'échelonne entre la température ambiante et 1700°C, de préférence entre la température ambiante et 1550°C et l'on maintient, la température lorsqu'elle atteint de 1300 à 1550°C pendant une durée qui dépend de la température et de la microstructure désirée. Pour plus de précisions sur ce palier de température, on peut se référer aux exemples.

Il est à remarquer que de très fortes densités sont obtenues pour des températures de frittage modérées. On note une baisse de la température de frittage de 300 à 400°C par rapport à celle nécessaire pour fritter l'oxyde d'yttrium seul.

Par ailleurs, le corps céramique fritté présente une très bonne microstructure, sans croissance exagérée des grains.

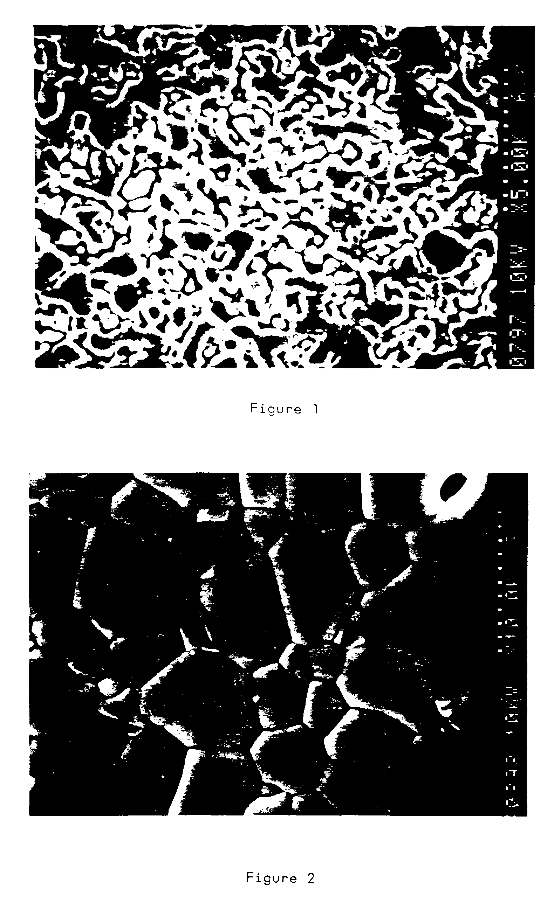

A titre illustratif, on peut se référer aux figures 1 et 2 qui représentent des photographies prises au microscope électronique à balayage (avec un grossissement respectif de 5 000 et 10 000) de différentes céramiques.

La figure 1 met en évidence la microstructure d'une céramique constituée d'oxyde d'yttrium seul et fritté à 1500°C.

La figure 2 révèle la microstructure d'une poudre frittée à 1500°C contenant 99 % de Y₂O₃ et 1 % de TiO₂. On se référera à l'exemple 1 pour plus de détails sur sa préparation.

Il ressort de la comparaison entre la figure 1 et la figure 2 que la présence des additifs de frittage précités améliorent notablement la microstructure de la céramique obtenue.

En raison de leurs bonnes propriétés, les compositions de l'invention peuvent servir notamment comme matières premières dans la fabrication de céramiques, en tant que renforçateurs d'alumine et comme corps broyants. Elles peuvent être également utilisées dans le domaine de la métallurgie, notamment pour la réalisation de creusets et de filtres pour métaux liquides.

Les exemples qui suivent illustrent l'invention sans toutefois la limiter.

Dans les exemples, les pourcentages donnés sont exprimés en poids.

### EXEMPLES 1 A 3

Dans cet exemple, on prépare une composition céramique par mélange de poudre d'oxyde d'yttrium et d'oxyde de titane.

Dans un broyeur à billes de zircon (ATTRITOR) tournant à 400 tours/minute, on effectue le mélange des poudres suivantes dans l'éthanol mis en quantité équivalente à la charge :
- l'oxyde d'yttrium utilisé commercialisé par la Société Rhône-Poulenc possédant un diamètre moyen de particules mesuré au SEDIGRAPH de 3,4 »m et ayant une pureté de 99,99 % (qualité luminophore)
- l'oxyde de titane TiO₂ anatase ayant un diamètre moyen de particules de 8,5 »m et ayant une pureté supérieure à 99 %.

On commence par introduire dans le broyeur 50 g d'oxyde d'yttrium que l'on broie pendant une heure dans l'éthanol mis en oeuvre à raison de 60 %.

On ajoute ensuite l'oxyde de titane en quantité adéquate définie dans le Tableau I et l'on effectue un co-broyage pendant 30 minutes.

On élimine l'éthanol et l'eau par évaporation dans un évaporateur sous pression réduite assurée par la trompe à eau.

On obtient une composition sous forme de poudre qui est soumise à un tamisage, qui permet d'éliminer les agglomérats de diamètre supérieur à 400 »m.

Elle est ensuite pastillée sous une pression de 150 MPa et soumise à l'opération de frittage.

On monte progressivement la température de 20°C/mn jusqu'à 1000°C puis de 3°C/mn jusqu'à la température de frittage de 1500°C : ladite température est maintenue pendant 3 heures.

Les résultats obtenus sont consignés dans le Tableau I.

**TABLEAU I**

| Exemple | 1 | 2 | 3 |
|---|---|---|---|
| % TiO₂ | 1 | 3 | 10 |
| d | 4,83 | 4,88 | 4,93 |
| dr % | 96 % | 97 % | 98 % |

dans ledit tableau, d représente la densité de la céramique obtenue mesurée par la technique d'Archimède en utilisant l'eau permutée comme liquide et dr est la densité relative exprimée en pourcentage de la densité théorique calculée avec l'hypothèse d'un mélange biphasé Y₂O₃-Y₂TiO₅.

La céramique obtenue présente une bonne microstructure.

Elle possède des grains sensiblement de même forme et présente une répartition uniforme de leur taille qui varie entre 1 et 5 »m après frittage à 1500°C.

### EXEMPLES 4 et 5

Dans les exemples qui suivent, on prépare une composition contenant de l'oxyde d'yttrium et de l'oxyde de titane selon une technique d'imprégnation.

On effectue le mélange de 50 g d'oxyde d'yttrium et de 50 cm³ d'éthanol. On ajoute ensuite 0,425 g de tétra n-butylate de titane, ce qui correspond à à 0,2 % de TiO₂.

On soumet l'ensemble à une opération de broyage, dans un broyeur à billes de zircon (ATTRITOR) tournant à 200 tours/minutes pendant 15 minutes.

On additionne ensuite 10 cm³ d'eau distillée et l'on poursuit l'opération de broyage pendant 1 heure 45 minutes.

On élimine l'éthanol et l'eau par évaporation dans un évaporateur sous pression réduite assurée par la trompe à eau.

On obtient une composition sous forme de poudre qui est tamisée à 100 »m.

Elle est ensuite pastillée sous une pression de 150 MPa et soumise à une opération de frittage.

On monte progressivement la température de 15°C/mn jusqu'à 1100°C puis de 5°C/mn jusqu'à la température de frittage de 1500°C : ladite température est maintenue pendant 3 heures.

Les résultats obtenus sont consignés dans le Tableau II.

**TABLEAU II**

| Exemple | 4 | 5 |
|---|---|---|
| % de TiO₂ | 0,2 | 1 |
| d | 4,83 | 5,01 |
| dr % | 96,0 % | 99,5 % |

### EXEMPLES 6 et 7

Dans cet exemple, on prépare une composition céramique à partir d'oxyde d'yttrium et de Y₂Ti₂O₅.

Dans un broyeur à billes de zircon tournant à 200 tours/minute, on effectue le co-broyage pendant 2 heures dans l'éthanol de Y₂O₃ et Y₂Ti₂O₅ mis en jeu dans les proportions définies dans le Tableau III.

On élimine l'éthanol et l'eau par évaporation dans un évaporateur sous pression réduite assurée par la trompe à eau.

On obtient une poudre qui est tamisée à 100 »m

Elle est ensuite pastillée sous une pression de 150 MPa.

On procède au frittage dans les conditions des exemples 4 et 5 (température de frittage = 1500°C).

Les résultats obtenus sont consignés dans le Tableau III.

**TABLEAU III**

| Exemple | 6 | 7 |
|---|---|---|
| % de TiO₂ | 0,2 | 1 |
| d | 4,79 | 5,02 |
| dr % | 95,2 % | 99,8 % |

## Revendications

1. Corps céramique fritté, caractérisé par le fait qu'il comprend essentiellement de 80 à 99,99 % en poids d'yttrium exprimé en Y₂O₃ et de 0,01 à 20 % en poids de titane exprimé en TiO₂, et en ce qu'il a un poids spécifique supérieur à 4,50 g/cm³.

2. Corps céramique fritté selon la revendication 1 caractérisé par le fait qu'il comprend essentiellement de 90 à 99,98 % en poids environ d'yttrium exprimé en Y₂O₃ et de 0,02 à 10 % en poids environ de titane exprimé en TiO₂.

3. Corps céramique fritté selon l'une des revendications 1 à 2 caractérisé par le fait qu'il a un poids spécifique supérieur à 4,78 g/cm³.

4. Corps céramique fritté selon l'une des revendications 1 à 3 caractérisé par le fait que ledit poids spécifique est obtenu après frittage à une température comprise entre 1300 et 1700°C.

5. Procédé de préparation d'un corps céramique fritté tel que décrit à l'une quelconque des revendications 1 à 4, caractérisé en ce qu'il consiste à mettre en forme une composition comprenant, dans les proportions requises, de l'oxyde d'yttrium et au moins un oxyde de titane, ou les précurseurs desdits oxydes, puis à cuire la composition mise en forme pendant un temps et à une température tels que le poids spécifique du corps après cuisson est supérieur à 4,50 g/cm³.

6. Procédé selon la revendication 5 caractérisé par le fait que l'oxyde de titane est TiO₂ et/ou Y₂TiO₅ et/ou Y₂Ti₂O₇.

7. Procédé selon la revendication 5 caractérisé par le fait que ladite composition comprend de l'oxyde d'yttrium et de l'oxyde de titane et/ou un oxyde mixte yttrium-titane ; de l'oxyde d'yttrium et un précurseur d'oxyde de titane ; de l'oxyde d'yttrium et de l'oxyde de titane tous deux sous forme de précurseurs d'oxyde.

8. Procédé selon la revendication 7 caractérisé par le fait que le précurseur d'oxyde de titane est un sel de titane ou un alcoolate de titane ; les précurseurs d'oxyde d'yttrium et de titane sont un co-précipité hydroxyde, oxalique ou carbonate.

9. Procédé selon l'une quelconque des revendications 5 à 8, caractérisé en ce que ladite composition a été obtenue selon un procédé consistant à mélanger intimement de l'oxyde d'yttrium et au moins un oxyde de titane, à sécher éventuellement le mélange obtenu.

10. Procédé selon la revendication 9 caractérisé par le fait que lesdits oxydes d'yttrium et de titane présentent une pureté supérieure à 99 %.

11. Procédé selon la revendication 9 caractérisé par le fait que lesdites poudres d'oxydes présentent une granulométrie telle que le diamètre moyen soit inférieur ou égal à 1 »m.

12. Procédé selon l'une des revendications 9 à 11 caractérisé par le fait que ledit oxyde de titane peut être un monoxyde de titane, un sesquioxyde de titane, un dioxyde de titane sous forme anatase ou rutile, un oxyde mixte Y₂TiO₅ et/ou Y₂TiO₇.

13. Procédé selon l'une des revendications 9 à 12 caractérisé par le fait que le mélange intime est effectué par un broyage en humide ou à sec.

14. Procédé selon l'une des revendications 9 à 13 caractérisé par le fait que le séchage est effectué à une température comprise entre 20 et 150°C.

15. Procédé selon l'une quelconque des revendications 5 à 8, caractérisé par le fait que ladite composition a été obtenue selon un procédé consistant :
a) à effectuer une co-précipitation de composés d'yttrium et de titane à partir d'une solution de sels solubles des éléments précités,
b) séparer le co-précipité obtenu,
c) éventuellement à séchér le produit obtenu après séparation
d) puis éventuellement à le calciner.

16. Procédé selon la revendication 15 caractérisé par le fait que ladite solution de sel soluble d'yttrium peut être une solution de nitrate, chlorure et/ou sulfate.

17. Procédé selon l'une des revendications 15 et 16 caractérisé par le fait que ledit sel soluble de titane peut être le chlorure de titane, l'oxychlorure de titane, un alcoolate de titane dérivé d'un alcool aliphatique ayant de 1 à 4 atomes de carbone.

18. Procédé selon l'une des revendications 16 et 17 caractérisé par le fait que lesdits sels sont en solution aqueuse ou organique.

19. Procédé selon l'une des revendications 15 à 18 caractérisé par le fait que l'on co-précipite lesdits éléments sous forme d'hydroxydes, oxalates ou carbonates.

20. Procédé selon la revendication 15 caractérisé par le fait que l'on effectue une co-précipitation des hydroxydes par mélange de la solution des sels solubles desdits éléments avec une solution basique.

21. Procédé selon la revendication 20 caractérisé par le fait que le pH du milieu réactionnel est de 9 à 12.

22. Procédé selon la revendication 15 caractérisé par le fait que l'on effectue une co-précipitation des oxalates par mélange de la solution des sels solubles desdits éléments avec l'acide oxalique ou ses sels.

23. Procédé selon la revendication 22, caractérisé par le fait que l'agent précipitant est l'oxalate d'ammonium.

24. Procédé selon l'une des revendications 22 et 23 caractérisé par le fait que le pH du milieu réactionnel est 5,5 à 6.

25. Procédé selon l'une des revendications 15 à 24 caractérisé par le fait que le séchage est effectué à une température comprise entre 20 et 150°C.

26. Procédé selon l'une des revendications 15 à 25 caractérisé par le fait que la calcination est effectuée à une température comprise entre 400 et 600°C.

27. Procédé selon l'une quelconque des revendications 5 à 8 caractérisé par le fait que ladite composition a été obtenue selon un procédé consistant à imprégner l'oxyde d'yttrium à l'aide d'une solution d'au moins un sel de titane puis à effectuer éventuellement un séchage et une calcination.

28. Procédé selon la revendication 27 caractérisé par le fait que le sel de titane peut être le chlorure de titane, l'oxychlorure de titane, un alcoolate de titane dérivé d'un alcool aliphatique ayant de 1 à 4 atomes de carbone.

29. Procédé selon la revendication 27 caractérisé par le fait que le séchage est effectué à une température comprise entre 20° et 150°C et la calcination à une température comprise entre 400 et 600°C.

## Claims

1. Sintered ceramic body, characterized in that it essentially comprises 80 to 99.99 wt.% yttrium, expressed as Y₂O₃, and 0.01 to 20 wt.% of titanium, expressed at TiO₂, and in that it has a specific gravity above 4.50 g/cm³.

2. Sintered ceramic body according to claim 1, characterized in that it essentially comprises approximately 90 to 99.98 wt.% yttrium, expressed at Y₂O₃, at approximately 0.02 to 10 wt.% of titanium, expressed as TiO₂.

3. Sintered ceramic body according to one of the claims 1 and 2, characterized in that it has a specific gravity exceeding 4.78 g/cm³.

4. Sintered ceramic body according to one of the claims 1 to 3, characterized in that said specific gravity is obtained after sintering at a temperature between 1300 and 1700°C.

5. Process for the preparation of a sintered ceramic body as described in any one of the claims 1 to 4, characterized in that it consists of shaping a composition comprising, in the required proportions, yttrium oxide and at least one titanium oxide, or precursors of said oxides, followed by the calcining of the shaped composition for a time and at a temperature such that the specific gravity of the body after calcining exceeds 4.50 g/cm³.

6. Process according to claim 5, characterized in that the titanium oxide is TiO₂ and/or Y₂TiO₅ and/or Y₂Ti₂O₇.

7. Process according to claim 5, characterized in that said composition comprises yttrium oxide and titanium oxide and/or a mixed yttrium - titanium oxide; yttrium oxide and a titanium oxide precursor; yttrium oxide and titanium oxide, both in oxide precursor form.

8. Process according to claim 7, characterized in that the titanium oxide precursor is a titanium salt or a titanium alcoholate, the yttrium and titanium oxide precursors being a carbonate or oxalic, hydroxide coprecipitate.

9. Process according to any one of the claims 5 to 8, characterized in that said composition was obtained according to a process consisting of intimately mixing the yttrium oxide and at least one titanium oxide, with optional drying of the mixture obtained.

10. Process according to claim 9, characterized in that said yttrium and titanium oxides have a purity greater than 99%.

11. Process according to claim 9, characterized in that said oxide powders have a grain size such that the mean diameter is equal to or below 1 »m.

12. Process according to any one of the claims 9 to 11, characterized in that said titanium oxide can be a titanium monoxide, a titanium sesquioxide, a titanium dioxide in anatase or rutile form, or a mixed oxide Y₂TiO₅ and/or Y₂TiO₇.

13. Process according to any one of the claims 9 to 12, characterized in that said intimate mixing takes place by wet or dry grinding.

14. Process according to any one of the claims 9 to 13, characterized in that drying takes place at a temperature between 20 and 150°C.

15. Process according to any one of the claims 5 to 8, characterized in that said composition was obtained according to a process consisting of:
a) performing a coprecipitation of yttrium and titanium compounds on the basis of a solution of soluble salts of the aforementioned elements,
b) separating the coprecipitate obtained,
c) optionally drying the product obtained after separation,
d) then optionally calcining it.

16. Process according to claim 15, characterized in that said soluble yttrium salt solution can be a nitrate, chloride and/or sulphate solution.

17. Process according to any one of the claims 15 and 16, characterized in that said soluble titanium salt can be titanium chloride, titanium oxychloride, a titanium alcoholate derived from an aliphatic alcohol having 1 to 4 carbon atoms.

18. Process according to either of the claims 16 and 17, characterized in that said salts are in aqueous or organic solution.

19. Process according to any one of the claims 15 to 18, characterized in that said elements are coprecipitated in the form of hydroxides, oxalates or carbonates.

20. Process according to claim 15, characterized in that a coprecipitation of the hydroxides takes place by mixing the solution of the soluble salts of said elements with a basic solution.

21. Process according to claim 20, characterized in that the pH of the reaction medium is 9 to 12.

22. Process according to claim 15, characterized in that a coprecipitation of the oxalates takes place by mixing the solution of the soluble salts of said elements with oxalic acid or its salts.

23. Process according to claim 22, characterized in that the precipitating agent is ammonium oxalate.

24. Process according to either of the claims 22 and 23, characterized in that the pH of the reaction medium is 5.5 to 6.

25. Process according to any one of the claims 15 to 24, characterized in that drying takes place at a temperature between 20 and 150°C.

26. Process according to any one of the claims 15 to 25, characterized in that calcination takes place at a temperature between 400 and 600°C.

27. Process according to any one of the claims 5 to 8, characterized in that said composition was obtained according to a process consisting of impregnating the yttrium oxide with the aid of a solution of at least one titanium salt and then optionally performing a drying and calcining.

28. Process according to claim 27, characterized in that the titanium salt can be titanium chloride, titanium oxychloride, a titanium alcoholate derived from an aliphatic alcohol having 1 to 4 carbon atoms.

29. Process according to claim 27, characterized in that drying takes place at a temperature between 20 and 150°C and calcining at a temperature between 400 and 600°C.

## Patentansprüche

1. Keramischer Sinterkörper, dadurch gekennzeichnet, daß er im wesentlichen von 80 bis 99,99 Gew.-% Yttrium umfaßt, ausgedrückt als Y₂O₃, und von 0,01 bis 20 Gew.-% Titan, ausgedrückt als TiO₂, und dadurch, daß er ein spezifisches Gewicht von mehr als 4,50 g/cm³ hat.

2. Keramischer Sinterkörper nach Anspruch 1, dadurch gekennzeichnet, daß er im wesentlichen von 90 bis 99,98 Gew.-% Yttrium umfaßt, ausgedrückt als Y₂O₃, und von 0,02 bis 10 Gew.-% Titan, ausgedrückt als TiO₂.

3. Keramischer Sinterkörper nach einem der Ansprüche 1 bis 2, dadurch gekennzeichnet, daß er ein spezifisches Gewicht von mehr als 4,78 g/cm³ hat.

4. Keramischer Sinterkörper nach einem der Ansprüche 1 bis 3, dadurch gekennzeichnet, daß das spezifischen Gewicht erreicht wird nach dem Sintern bei einer Temperatur, die enthalten ist zwischen 1300 und 1700°C.

5. Herstellungsverfahren eines keramischen Sinterkörpers wie beschrieben in den Ansprüchen 1 bis 4, dadurch gekennzeichnet, daß es darin besteht, eine Zusammensetzung zu formen, umfassend, mit den erforderlichen Anteilen, Yttriumoxid und wenigsten ein Titanoxid, oder die Vorläufer dieser Oxide, dann die geformte Zusammensetzung während einer Zeitdauer und bei einer Temperatur zu sintern, die so sind, daß das spezifische Gewicht des Körpers nach dem Sintern höher ist als 4,50 g/cm³.

6. Verfahren nach Anspruch 5, dadurch gekennzeichnet, daß das Titanoxid TiO₂ ist und/oder Y₂TiO₅ und/oder Y₂TiO₇.

7. Verfahren nach Anspruch 5, dadurch gekennzeichnet, daß besagte Zusammensetzung Yttriumoxid und Titanoxid und/oder ein Yttrium-Titan-Mischoxid, Yttriumoxid und einen Vorläufer von Titanoxid, Yttriumoxid und Titanoxid, alle beide in Form von Oxidvorläufern, umfaßt.

8. Verfahren nach Anspruch 7, dadurch gekennzeichnet, daß der Vorläufer des Titanoxids ein Titansalz ist oder ein Titanalkoholat; die Yttrium- und Titanoxidvorläufer ein Hydroxid-, Oxal- oder Carbonat-Kopräzipitat sind.

9. Verfahren nach einem der Ansprüche 5 bis 8, dadurch gekennzeichnet, daß die genannte Zusammensetzung hergestellt wurde nach einem Verfahren, darin bestehen, Yttriumoxid und wenigstens ein Titanoxid intensiv zu mischen und die erhaltene Mischung eventuell zu trocknen.

10. Verfahren nach Anspruch 9, dadurch gekennzeichnet, daß die genannten Yttrium- und Titanoxide eine Reinheit von mehr als 99 % aufweisen.

11. Verfahren nach Anspruch 9, dadurch gekennzeichnet, daß die genannten Oxidpulver eine derartige Granulometrie aufweisen, daß der mittlere Durchmesser kleiner oder gleich 1 »m ist.

12. Verfahren nach einem der Ansprüche 9 bis 11, dadurch gekennzeichnet, daß besagtes Titanoxid ein Titanmonoxid, ein Titantrioxid, ein Titandioxid in Anastas- oder Rutilform, ein Mischoxid Y₂TiO₅- und/oder Y₂TiO₇ sein kann.

13. Verfahren nach einem der Ansprüche 9 bis 12, dadurch gekennzeichnet, daß die intenive Mischung durch eine Naß- oder Trockenvermahlung erfolgt.

14. Verfahren nach einem der Ansprüche 9 bis 13, dadurch gekennzeichnet, daß die Trocknung bei einer Temperatur zwischen 20 und 150°C erfolgt.

15. Verfahren nach einem der Ansprüche 5 bis 8, dadurch gekennzeichnet, daß die genannte Zusammensetzung nach einem folgende Schritte umfassenden Verfahren erfolgt:
a) Durchführen einer Kopräzipitation von Yttrium- und Titanzusammensetzungen aus einer Lösung von lösbaren Salzen der vorerwähnten Elemente,
b) Trennen des erhaltenen Kopräzipitats,
c) Eventuell Trocken des nach der Trennung erhaltenen Produkts,
d) es dann eventuell kalzinieren.

16. Verfahren nach Anspruch 15, dadurch gekennzeichnet, daß die genannte Lösung aus lösbarem Yttriumsalz eine Nitrid-, Chlorid- und/oder Sufatlösung ist.

17. Verfahren nach einem der Ansprüche 15 und 16, dadurch gekennzeichnet, daß das lösbare Titansalz Titanchlorid, Titanoxychlorid, ein Titanalkoholat, Derivat von einem aliphatischen Alkohol mit 1 bis 4 Kohlenstoffatomen, ist.

18. Verfahren nach einem der Ansprüche 16 und 17, dadurch gekennzeichnet, daß die genannten Salze in wäßriger oder organischer Lösung sind.

19. Verfahren nach einem der Ansprüche 15 bis 18, dadurch gekennzeichnet, daß man die genannten Elemente kopräzipitiert in Form von Hydrooxiden, Oxalaten oder Carbonaten.

20. Verfahren nach Anspruch 15, dadurch gekennzeichnet, daß man eine Kopräzipitation der Hydrooxide ausführt durch Mischen der Lösung der lösbaren Salze der genannten Elemente mit einer basischen Lösung.

21. Verfahren nach Anspruch 20, dadurch gekennzeichnet, daß der pH des reaktionellen bzw. reaktiven Milieus 9 bis 12 ist.

22. Verfahren nach Anspruch 15, dadurch gekennzeichnet, daß man eine Kopräzipitätion der Oxalate durchführt mittels Mischens der Lösung der lösbaren Salze der genannten Elemente mit der Oxalsäure oder diesen Salzen.

23. Verfahren nach Anspruch 22, dadurch gekennzeichnet, daß der präzipitierende Wirkstoff ein Ammoniumoxalat ist.

24. Verfahren nach einem der Ansprüche 22 und 23, dadurch gekennzeichnet, das der pH des reaktionellen bzw. reaktiven Milieus 5,5 bis 6 ist.

25. Verfahren nach einem der Ansprüche 15 bis 24, dadurch gekennzeichnet, daß die Trocknung bei einer Temperatur enthalten zwischen 20 und 150°C erfolgt.

26. Verfahren nach einem der Ansprüche 15 bis 25, dadurch gekennzeichnet, daß die Kalzinierung bei einer Temperatur enthalten zwischen 400 und 600°C erfolgt.

27. Verfahren nach einem der Ansprüche 5 bis 8, dadurch gekennzeichnet, daß die genannte Zusammensetzung hergestellt wurde nach einem Verfahren, darin bestehend, das Yttriumoxid zu durchsetzen mit einer Lösung von wenigstens einem Titansalz, sodann eventuell eine Trocknung und eine Kalzinierung durchzuführen.

28. Verfahren nach Anspruch 27, dadurch gekennzeichnet, daß das Titansalz Titanchlorid, Titanoxychlorid, ein Titanalkoholat, Derivat von einem aliphatischen Alkohol mit 1 bis 4 Kohlenstoffatomen, ist.

29. Verfahren nach Anspruch 27, dadurch gekennzeichnet, daß die Trocknung durchgeführt wird bei einer Temperatur, enthalten zwischen 20 und 150°C, und die Kalzinierung bei einer Temperatur zwischen 400 und 600°C.
